# EUROPÄISCHE PATENTSCHRIFT

(11) **EP 4 733 605 B1**
(45) Veröffentlichungstag und Bekanntmachung des Hinweises auf die Patenterteilung: **30.09.2026**
(21) Anmeldenummer: 24208229.5
(22) Anmeldetag: 22.10.2024
(51) Int. Cl.: F16B 5/02, F04B 39/00

(54) **BEFESTIGUNGSVORRICHTUNG ZUR SCHWINGUNGSENTKOPPELTEN BEFESTIGUNG EINES FAHRZEUGBEFESTIGUNGSTEILS AN EINEM FAHRZEUGRAHMENTEIL**
FIXING DEVICE FOR THE VIBRATION-DECOUPLED FIXING OF A VEHICLE FASTENING PART TO A VEHICLE FRAME PART
DISPOSITIF DE FIXATION POUR LA FIXATION DÉCOUPLÉE DES VIBRATIONS D'UNE PIÈCE DE FIXATION DE VÉHICULE SUR UNE PARTIE DU CHÂSSIS DE VÉHICULE

(43) Veröffentlichungstag der Anmeldung: 29.04.2026
(73) Patentinhaber: Vibracoustic SE, 69469 Weinheim (DE)
(72) Erfinder: Ernst, Björn Christian, 33191 Värnamo (SE)
(74) Vertreter: Patentanwälte Olbricht Buchhold Keulertz

(56) Entgegenhaltungen:
- WO-A1-00/50803
- JP-A- 2005 220 855
- US-A- 4 306 708
- US-A- 6 138 980
- US-A1- 2011 147 150
- US-A1- 2023 375 126

## Beschreibung

Die Erfindung betrifft eine Befestigungsvorrichtung zur schwingungsentkoppelten Befestigung eines Fahrzeugbefestigungsteils an einem Fahrzeugrahmenteil. Die Befestigungsvorrichtung umfasst ein Bolzenelement, das sich länglich in Richtung einer Bolzenlängsachse erstreckt. Das Bolzenelement weist einen Kopfabschnitt, einen Mittelabschnitt und einen Senkabschnitt auf. Der Kopfabschnitt erstreckt sich axial bis zu einer zur Bolzenlängsachse rechtwinkligen Kopfanlageebene und hat eine erste radiale Erstreckung. Der Mittelabschnitt erstreckt sich axial von der Kopfanlageebene bis zu einer zur Bolzenelementlängsachse rechtwinkligen Rahmenanlageebene und hat eine zweite radiale Erstreckung, die kleiner als die erste radiale Erstreckung ist. Der Senkabschnitt schließt sich axial an die Rahmenanlageebene an, hat eine dritte radiale Erstreckung und ist zur axialen Einführung in das Fahrzeugrahmenteil ausgebildet. Die Befestigungsvorrichtung umfasst eine Schwingungsentkopplungseinrichtung. Das Bolzenelement erstreckt sich durch die Schwingungsentkopplungseinrichtung. Die Schwingungsentkopplungseinrichtung ist an dem Fahrzeugbefestigungsteil anzulegen. Die Schwingungsentkopplungseinrichtung weist ein erstes Entkopplungselement und ein zweites Entkopplungselement auf. Das erste Entkopplungselement und das zweite Entkopplungselement weisen je ein Scheibensegment und ein Hülsensegment auf. Das Scheibensegment des ersten Entkopplungselementes erstreckt sich im Wesentlichen radial von dem Bolzenelement weg und grenzt an die Kopfanlageebene an. Das Hülsenelement des ersten Entkopplungselementes erstreckt sich im Wesentlichen axial vom Scheibensegment in Richtung der Rahmenanlageebene. Das Scheibensegment des zweiten Entkopplungselementes erstreckt sich im Wesentlichen radial von dem Bolzenelement weg und grenzt an die Rahmenanlageebene an. Das Hülsenelement des zweiten Entkopplungselementes erstreckt sich im Wesentlichen axial vom Scheibensegment in Richtung der Kopfanlageebene.

Eine solche Befestigungsvorrichtung ist beispielsweise aus der JP 2005 220 855 A bekannt. Derartige Befestigungsvorrichtungen sind im Fahrzeugbau beispielsweise zur Befestigung von als Kompressoren ausgebildeten Fahrzeugbefestigungsteilen an Fahrzeugrahmenteilen, insbesondere an Chassis, bekannt. Die Schwingungsentkopplung bewirkt, dass das Fahrzeugbefestigungsteil im Betrieb relativ zum Fahrzeugrahmenteil schwingen kann. Zur Schwingungsentkopplung wird das Fahrzeugbefestigungsteil nicht starr und unmittelbar zwischen dem Kopfabschnitt des Bolzenelementes und dem Fahrzeugrahmenteil eingespannt, sondern werden die Entkopplungselemente zwischen dem Bolzenelement und dem Fahrzeugbefestigungsteil angeordnet.

Wesentlich für die Schwingungsentkopplung ist die Herstellung eines definierten axialen Abstandes zwischen dem Kopfabschnitt des Bolzenelementes und dem Fahrzeugrahmenteil. Dieser Abstand wird bei den bekannten Befestigungsvorrichtungen durch die kumulierte axiale Erstreckung der Entkopplungselemente hergestellt. Das Bolzenelement, dessen Senkabschnitt und dessen Mittelabschnitt die gleiche radiale Erstreckung haben und das ein sich vom Senkabschnitt bis auf den Mittelabschnitt erstreckendes Außengewinde ausbildet, wird gemäß dem Stand der Technik so weit in das Fahrzeugrahmenteil eingeschraubt, bis die Entkopplungselemente zwischen dem Fahrzeugrahmenteil und dem Kopfabschnitt ein weiteres Einschrauben blockieren. Hierzu sind die Entkopplungselemente der bekannten Befestigungsvorrichtungen zumindest teilweise als metallische Schmiedeteile ausgebildet. Diese Schmiedeteile sind nur mit verhältnismäßig großen Toleranzen zu fertigen, weshalb der für die Schwingungsentkopplung wesentliche Abstand zwischen dem Kopfabschnitt und dem Fahrzeugrahmenteil nur unzuverlässig herzustellen ist. Außerdem bedeutet die notwendige kumulierte axiale Erstreckung der Entkopplungselemente und ihre notwendige Stabilität einen erheblichen Materialaufwand und insbesondere ein erhebliches Gewicht der Befestigungsvorrichtung, die nachteilig sind.

Aufgabe der vorliegenden Erfindung ist eine Weiterbildung der gattungsgemäßen Befestigungsvorrichtung derart, dass die vorbeschriebenen Nachteile zu vermeiden sind. Aufgabe der vorliegenden Erfindung ist weiterhin die Bereitstellung eines Fahrzeuges mit der weitergebildeten Befestigungsvorrichtung.

Die dritte radiale Erstreckung ist derart kleiner als die zweite radiale Erstreckung, dass der Mittelabschnitt zu einer Begrenzung des Einführens des Bolzenelementes in das Fahrzeugrahmenteil ausgebildet ist. Die im Gegensatz zum Stand der Technik unterschiedlichen radialen Erstreckungen des Mittelabschnittes und des Senkabschnittes führen dazu, dass ein Weg, um den das Bolzenelement axial in das Fahrzeugrahmenteil einzuführen ist, allein durch das Bolzenelement, insbesondere die axiale Erstreckung des Senkabschnittes, definiert ist. Dadurch bedarf es keiner weiteren Bauteile, insbesondere nicht der Entkopplungselemente, zur Begrenzung des Weges und damit zur Einstellung des Abstandes zwischen dem Kopfabschnitt und dem Fahrzeugrahmenteil. Das Bolzenelement ist aufgrund des einfacheren Aufbaus gegenüber den Entkopplungselementen einfach und mit wesentlich geringeren Toleranzen zu fertigen, wodurch der Abstand zwischen dem Kopfabschnitt und dem Fahrzeugrahmenteil zuverlässiger einzustellen ist und folglich die Schwingungsentkopplung zuverlässiger umzusetzen ist. Die geringeren Anforderungen an die Entkopplungselemente erlauben eine leichtere Ausbildung und günstigere Fertigung derer, ohne dadurch die Funktion der Befestigungsvorrichtung einzuschränken.

Erfindungsgemäß ist zumindest eines der Entkopplungselemente einteilig und in einem Längsschnitt entlang einer Längsschnittebene, in der die Bolzenlängsachse angeordnet ist, beiderseits der Bolzenlängsachse L-förmig ausgebildet.

Bei dem Bolzenelement handelt es sich bevorzugt um einen Bolzen, insbesondere um einen sogenannten Schulterbolzen. Das Bolzenelement ist vorzugsweise einstückig und/oder aus Stahl ausgebildet. Besonders bevorzugt weist der Senkabschnitt, insbesondere im Gegensatz zum Mittelabschnitt, zumindest teilweise ein Außengewinde zum Einschrauben des Bolzenelementes in das Fahrzeugrahmenteil auf. Alternativ zum Einschrauben wird der Senkabschnitt per Pressverband oder ähnlich mit dem Fahrzeugrahmenteil verbunden.

Bevorzugt haben/hat der Kopfabschnitt und/oder der Mittelabschnitt und/oder der Senkabschnitt eine Querschnittsfläche mit zumindest einer runden Kontur. Das Bolzenelement ist bevorzugt zumindest im Wesentlichen achsensymmetrisch bezogen auf die Bolzenlängsachse ausgebildet. Die Achsensymmetrie ist insbesondere mit Ausnahme des Außengewindes und des Kopfabschnittes gegeben, der insbesondere eine Innen- oder Außensechskantaufnahme zur Anordnung eines Werkzeugs am Bolzenelement aufweist. Die genannten radialen Erstreckungen sind insbesondere Außenradien.

Die radialen Erstreckungen grenzen bevorzugt unmittelbar aneinander an. Das bedeutet, dass die radialen Erstreckungen des Bolzenelementes sich in der Rahmenanlageebene und/oder in der Kopfanlageebene sprunghaft ändern. Besonders bevorzugt weist das Bolzenelement (zumindest eine) Oberfläche/n auf, die sich zumindest abschnittsweise flächig in der Kopfanlageebene und/oder in der Rahmenanlageebene erstreckt/en. Alternativ zur sprunghaften Änderung der radialen Erstreckungen sind allmähliche Übergänge der unterschiedlichen radialen Erstreckungen ineinander, insbesondere Fasen, denkbar. Die radialen Erstreckungen sind bevorzugt zumindest über einen Teil der axialen Erstreckung des jeweiligen Abschnittes konstant. Der Abstand zwischen der Rahmenanlageebene und der Kopfanlageebene ist bevorzugt zumindest fünfmal so groß, besonders bevorzugt zumindest zehnmal so groß wie die zweite radiale Erstreckung.

Das erste Entkopplungselement und das zweite Entkopplungselement sind bevorzugt gleich ausgebildet und insbesondere zueinander in Bezug auf eine Spiegelebene, die rechtwinklig zur Bolzenlängsachse angeordnet ist, gespiegelt angeordnet. Zumindest eines der Entkopplungselemente ist einteilig ausgebildet. Zumindest eines der Entkopplungselemente weist eine Durchgangsbohrung auf, durch die sich das Bolzenelement insbesondere mit einer Spielpassung hindurcherstreckt. Im montierten Zustand liegt das erste Entkopplungselement in axialer Richtung am Kopfabschnitt als axialem Anschlag an. Das zweite Entkopplungselement liegt im montierten Zustand axial an der Oberfläche des Fahrzeugrahmenteils als axialem Anschlag an.

Die im Wesentlichen axiale Erstreckung des Hülsensegmentes meint eine das Bolzenelement umschließende Ring- oder Hülsenform des Hülsensegmentes. Das Hülsensegment weist auf einer vom Bolzenelement abgewandten Oberfläche bevorzugt sich axial erstreckende Rippen auf. Das Scheibensegment weist auf einer dem jeweils anderen Entkopplungselement zugewandten Seite bevorzugt sich radial erstreckende Rippen auf. Die Rippen unterstützen die Schwingungsentkopplung.

Vorzugsweise sind die Entkopplungselemente derart ausgebildet, dass ihre kumulierte axiale Erstreckung kleiner ist als der Abstand der Kopfanlageebene von der Rahmenanlageebene. Das bedeutet, dass die insbesondere genau zwei Entkopplungselemente in die axiale Richtung voneinander beabstandet sind. Bevorzugt ist dadurch zwischen den Entkopplungselementen ein Freiraum ausgebildet. Die genannte kumulierte axiale Erstreckung macht, nachdem eine kumulierte axiale Erstreckung vom Kopfabschnitt bis zum Fahrzeugrahmenteil nicht weiter notwendig ist, die Schwingungsentkopplungseinrichtung weniger bauraum-, materialintensiv und schwer.

Bevorzugt ist die kumulierte axiale Erstreckung der Entkopplungselemente kleiner als eine Hälfte des Abstandes der Kopfanlageebene von der Rahmenanlageebene. Besonders bevorzugt ist die kumulierte axiale Erstreckung der Entkopplungselemente kleiner als ein Drittes des Abstandes der Kopfanlageebene von der Rahmenanlageebene. Durch diese maximalen kumulierten axialen Erstreckungen lassen sich die vorgenannten Vorteile zu einem besonders großen Ausmaß erreichen.

Vorzugsweise hat das Bolzenelement eine derartige Ausbildung, dass eine zur Bolzenlängsachse rechtwinklige Querschnittsfläche des Mittelabschnittes zwischen der Kopfanlageebene und der Rahmenanlageebene unveränderlich ist. Diese Querschnittsfläche ist insbesondere rund und frei von Unterbrechungen oder Ausnehmungen. Durch diese Ausbildung des Bolzenelementes lässt sich die Stabilität der Befestigungsvorrichtung im Verhältnis zu ihrem Gewicht maximieren und die Zuverlässigkeit der Befestigungsvorrichtung erhöhen. Alternativ zur unveränderlichen Ausbildung der Querschnittsfläche ist sie optional zwischen der Kopfanlageebene und der Rahmenanlageebene veränderlich, wodurch insbesondere Gewicht einzusparen ist.

In einer vorteilhaften Ausgestaltung der Erfindung weist das Bolzenelement eine Axialanlagefläche auf, die sich zumindest teilweise, insbesondere vollständig, eben in der Rahmenanlageebene erstreckt. Die Axialanlagefläche hat bevorzugt einen Innenradius, der höchstens der dritten radialen Erstreckung entspricht, und einen Außenradius, der der zweiten radialen Erstreckung entspricht. Durch die zur Bolzenlängsachse rechtwinklige Querschnittsfläche lässt sich ein flächiges Aufliegen des Bolzenelementes auf dem Fahrzeugrahmenteil und damit eine besonders genaue Positionierung des Kopfabschnittes relativ zum Fahrzeugrahmenteil erreichen.

Vorzugsweise hat eine Längsschnittsfläche des Scheibensegmentes des ersten Entkopplungselementes einerseits der Bolzenlängsachse eine Länge, die zumindest halb so groß ist und/oder höchstens gleich groß ist wie eine Länge einer Längsschnittsfläche des Hülsensegmentes des ersten Entkopplungselementes einerseits der Bolzenlängsachse. Alternativ oder zusätzlich gilt das Vorstehende für das Scheibensegment und das Hülsensegment des zweiten Entkopplungselementes. Die genannten Längen sind die Haupterstreckungsrichtungen der genannten Schnittflächen innerhalb der Längsschnittebene, in der die Bolzenlängsachse liegt, und einseitig der Bolzenlängsachse. Durch die genannte Spanne von Längenverhältnissen ist ein besonders praktikabler Kompromiss zwischen Material- und Gewichtseinsparung einerseits und optimaler Schwingungsentkopplung andererseits geschaffen. Optional bzw. alternativ hat die Längsschnittsfläche des Scheibensegmentes des ersten Entkopplungselementes einerseits der Bolzenlängsachse eine Länge, die größer ist als die Länge der Längsschnittsfläche des Hülsensegmentes des ersten Entkopplungselementes einerseits der Bolzenlängsachse. Auf diese Weise sind besonders große axial wirkende Kräfte konstruktiv einfach zu berücksichtigen.

Vorzugsweise sind/ist das erste Entkopplungselement und/oder das zweite Entkopplungselement frei von einem Metall ausgebildet. Besonders bevorzugt sind/ist das erste Entkopplungselement und/oder das zweite Entkopplungselement vollständig durch zumindest einen Kunststoff ausgebildet. Insbesondere ist zumindest ein Teil des ersten und/oder zweiten Entkopplungselementes durch Spritzguss hergestellt. Dadurch lässt sich eine für die Montage und die Schwingungsentkopplung hinreichende Formstabilität bei geringem Gewicht erzeugen.

Vorzugsweise umfassend/umfasst das erste Entkopplungselement und/oder das zweite Entkopplungselement einen Stützabschnitt und einen Nachgebeabschnitt. Der Stützabschnitt ist aus einem ersten Kunststoff ausgebildet. Insbesondere ist der Stützabschnitt spritzgegossen. Der Nachgebeabschnitt ist aus einem zweiten Kunststoff ausgebildet, der vom ersten Kunststoff abweicht und besonders bevorzugt weicher als der erste Kunststoff ausgebildet ist. Der Nachgebeabschnitt ist insofern weicher als der Stützabschnitt, als er nachgiebiger ausgebildet ist, das heißt bereits durch eine verhältnismäßig geringere Kraft formveränderlich ist und beispielsweise einen kleineren E-Modul hat. Der Nachgebeabschnitt ist insbesondere aus einem elastischen Kunststoff, wie zum Beispiel einem Silikon, einem Elastomer und/oder Kautschuk ausgebildet. Der Stützabschnitt ist insbesondere aus einem nicht wesentlich elastisch verformbaren Kunststoff, insbesondere einem faserverstärkten Kunststoff und/oder Polypropylen hergestellt. Alternativ zum Vorstehenden kann der Stützabschnitt auch wie im Stand der Technik aus einem Metall hergestellt sein. Der Stützabschnitt ist in diesem Fall insbesondere als Schmiedeteil, als Kaltfließpressteil oder als Drehteil ausgebildet.

Vorzugsweise erstrecken/erstreckt sich der Stützabschnitt und/oder der Nachgebeabschnitt zur Ausbildung zumindest eines Teils des Scheibensegmentes und zumindest eines Teils des Hülsensegmentes. Bevorzugt bildet der Nachgebeabschnitt zumindest eine dem jeweils anderen Entkopplungselement zugewandte Oberfläche des Scheibensegmentes und/oder eine von der Bolzenlängsachse abgewandte Oberfläche des Hülsensegmentes aus. Dadurch ist insbesondere zu erreichen, dass das Fahrzeugbefestigungsteil ausschließlich mit dem Nachgebeabschnitt in Kontakt ist, wodurch die Schwingungsentkopplung einheitlich optimal herzustellen ist.

Bevorzugt erstreckt sich der Nachgebeabschnitt des ersten Entkopplungselementes und/oder der Nachgebeabschnitt des zweiten Entkopplungselementes so weit von der Kopfanlageebene bzw. der Rahmenanlageebene weg, wie das Hülsensegment des jeweiligen Entkopplungselementes. Besonders bevorzugt bilden der Stützabschnitt und der Nachgebeabschnitt zwei im Längsschnitt sichtbare Schichten insbesondere konstanter Dicke, die sich nebeneinander in die Längsrichtungen der Längsschnittflächen des Scheibensegmentes und des Hülsensegmentes erstrecken.

Die Aufgabe wird weiterhin gelöst durch ein Fahrzeug. Das Fahrzeug weist einen Antrieb, ein Fahrwerk, das Fahrzeugrahmenteil und das Fahrzeugbefestigungsteil auf. Das Fahrzeugbefestigungsteil ist mittels zumindest einer vorbeschriebenen Befestigungsvorrichtung am Fahrzeugrahmenteil befestigt. Bevorzugt ist das Fahrzeugbefestigungsteil mittels zumindest oder genau drei oder vier Befestigungsvorrichtungen am Fahrzeugrahmenteil befestigt. Das Fahrzeugbefestigungsteil ist insbesondere als elektrisch anzutreibender Kompressor ausgebildet. Das Fahrzeugbefestigungsteil umfasst vorzugsweise einen Elektromotor und/oder ein insbesondere aus Aluminium ausgebildetes Druckgussgehäuse. Das Fahrzeugbefestigungsteil weist besonders bevorzugt zumindest eine Durchgangsbohrung auf, durch die sich das Bolzenelement erstreckt, wobei die Durchgangsbohrung in einem mittleren Teil in radialer Richtung vorzugsweise geöffnet ausgebildet ist. Das Fahrzeugrahmenteil ist insbesondere von einem Chassis oder von einer Karosserie des Fahrzeuges umfasst.

Im Detail ist das Fahrzeug bevorzugt derart ausgebildet, dass sowohl die genannte Oberfläche des Scheibensegmentes als auch die genannte Oberfläche des Hülsensegmentes, jeweils sowohl des ersten Entkopplungselementes als auch des zweiten Entkopplungselementes, am Fahrzeugbefestigungsteil anliegen. Insbesondere ist das Fahrzeugbefestigungsteil zwischen den Scheibensegmenten axial mit einer definierten Spannung, insbesondere deutlich unterhalb der Belastungsgrenze, eingespannt. Die Einspannung bedeutet insbesondere, dass die Nachgebeabschnitte elastisch verformt sind. Das Ausmaß der Spannung bzw. der Verformung ist besonders bevorzugt durch den Abstand der Kopfanlageebene von der Rahmenanlageebene im Verhältnis zur Länge der Bohrung des Fahrzeugbefestigungsteils sowie den axialen Erstreckungen der Scheibensegmente definiert. Eine zusätzliche Spannung, die zwischen den Hülsensegmenten und dem Fahrzeugbefestigungsteil in radialer Richtung wirkt, wird insbesondere durch ein Übermaß des das jeweilige Hülsensegment mit ausbildenden Nachgebeabschnittes definiert.

Weitere Einzelheiten und Vorteile der vorbeschriebenen Erfindung lassen sich der schematisch dargestellten und nachfolgend beschriebenen Figur entnehmen; es zeigt:

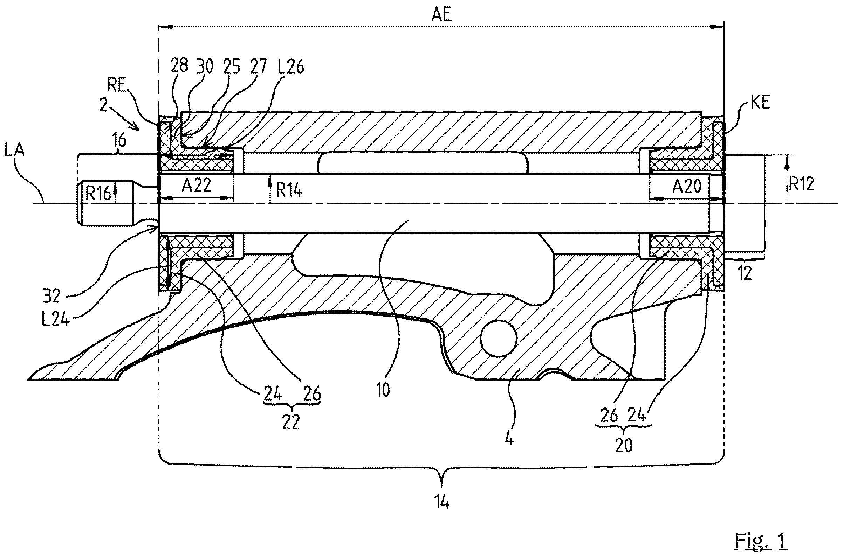

Fig. 1 einen Längsschnitt einer erfindungsgemäßen Befestigungsvorrichtung.

In der Figur sind gleiche oder einander entsprechende Elemente jeweils mit gleichen Bezugszeichen bezeichnet und werden daher, sofern nicht zweckmäßig, nicht mehrfach beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben auf die beschriebene Figur bezogen.

Die Fig. 1 zeigt ein Ausführungsbeispiel einer Befestigungsvorrichtung 2 zur Verfestigung eines teilweise dargestellten Fahrzeugbefestigungsteils 4 an einem nicht dargestellten Fahrzeugrahmenteil. Die Befestigungsvorrichtung 2 umfasst ein sich länglich in Richtung einer Bolzenlängsachse LA erstreckendes Bolzenelement 10. Das Bolzenelement 10 weist einen Kopfabschnitt 12, einen Mittelabschnitt 14 und einen Senkabschnitt 16 auf.

Der Kopfabschnitt 12 erstreckt sich axial einseitig einer Kopfanlageebene KE, die rechtwinklig zur Bolzenlängsachse LA ausgerichtet ist. Der Kopfabschnitt hat einen ersten Radius R12. Der Kopfabschnitt weist auf einer von der Kopfanlageebene KE abgewandten Seite eine Innen-SechskantAusnehmung auf.

Der Mittelabschnitt 14 erstreckt sich axial von der Kopfanlageebene KE bis zu einer Rahmenanlageebene RE. Der Mittelabschnitt 14 hat einen zweiten Radius R14, der kleiner als der erste Radius R12 ist. Der Mittelabschnitt 14 ist bezogen auf die Bolzenlängsachse LA rotationssymmetrisch ausgebildet, wobei zur Bolzenlängsachse LA rechtswinklige Querschnittsfläche des Mittelabschnittes 14 zwischen der Kopfanlageelement KE und der Rahmenanlageebene RE unveränderlich ist.

Die Rahmenanlageebene RE erstreckt sich ebenso wie die Kopfanlageebene KE rechtwinklig zur Bolzenelementlängsachse LA. Die Kopfanlageebene KE und die Rahmenanlageebene RE sind in Fig. 1 als gerade Strich-Punkt-Linien mit verhältnismäßig großer Strichstärke dargestellt.

Der Senkabschnitt 16 schließt sich axial an die Rahmenanlageebene RE an und erstreckt sich einseitig davon. Der Senkabschnitt 16 hat einen dritten Radius R16, der kleiner als der zweite Radius R14 ist. Der Senkabschnitt 16 ist zur axialen Einführung des Bolzenelementes 10 in das nicht veranschaulichte Fahrzeugrahmenteil ausgebildet und weist dazu ein nicht dargestelltes Außengewinde auf. Innerhalb der Rahmenanlageebene RE liegt eine Axialanlagefläche 32 des Bolzenelementes 10, die im montierten Zustand der Befestigungsvorrichtung 2 zur Begrenzung des Einführens des Bolzenelementes 10 in das Fahrzeugrahmenteil daran anliegt.

Die Befestigungsvorrichtung 2 weist eine Schwingungsentkopplungseinrichtung mit einem ersten Entkopplungselement 20 und einem zweiten Entkopplungselement 22 auf, durch die sich das Bolzenelement 10 erstreckt und an denen das Fahrzeugbefestigungsteil 4 anliegt. Das erste Entkopplungselement 20 und das zweite Entkopplungselement 22 sind gleich ausgebildet und nur der besseren Übersichtlichkeit halber jeweils nur mit einem Teil der sie betreffenden Bezugszeichen versehen.

Die Entkopplungselemente 20, 22 umfassen jeweils ein Scheibensegment 24 und ein Hülsensegment 26. Das Scheibensegment 24 erstreckt sich im Wesentlichen radial von dem Bolzenelement 10 weg. Das Scheibensegment 24 des ersten Entkopplungselementes 20 grenzt an die Kopfanlageebene KE an. Das Scheibensegment 24 des zweiten Entkopplungselementes 22 grenzt an die Rahmenanlageebene RE an. Das Hülsensegment 26 des ersten Entkopplungselementes 20 erstreckt sich im Wesentlichen axial vom Scheibensegment 24 des ersten Entkopplungselementes 20 in Richtung der Rahmenanlageebene RE. Das Hülsenelement 26 des zweiten Entkopplungselementes 22 erstreckt sich im Wesentlich axial von dem Scheibensegment 24 des zweiten Entkopplungselementes 22 in Richtung der Kopfanlageebene KE. Die Entkopplungselemente 20, 22 sind im dargestellten Ausführungsbeispiel mit einer Bohrung dargestellt, deren Durchmesser den Außendurchmesser des Mittelabschnittes 14 sichtbar übersteigt, wodurch nur exemplarisch eine Spielpassung zwischen den Entkopplungselementen 20, 22 und dem Mittelabschnitt 14 kenntlich gemacht werden soll.

Das erste Entkopplungselement 20 hat eine axiale Erstreckung A20. Das zweite Entkopplungselement 22 hat eine axiale Erstreckung A22. Die sich aus den genannten axialen Erstreckungen ergebende kumulierte axiale Erstreckung A20, A22 der Entkopplungselemente 20, 22 ist kleiner als ein Drittel eines Abstandes AE der Kopfanlageebene KE von der Rahmenanlageebene RE. Der Abstand AE ist in Fig. 1 mittels eines Doppelpfeiles und zwei vertikalen Hilfslinien kenntlich gemacht, auf denen die Strich-Punkt-Linien zur Darstellung der Kopfanlageebene bzw. Rahmenanlageebene RE liegen.

Eine Längsschnittsfläche des Scheibensegmentes 24 der Entkopplungselemente 20, 22 einerseits der Bolzenlängsachse LA hat eine Länge L24, die mehr als halb so groß und höchstens gleich groß wie eine Länge L26 einer Längsschnittsfläche des Hülsensegmentes 26 der Entkopplungselemente 20, 22 einerseits der Bolzenlängsachse LA. Die Entkopplungselemente 20, 22 weisen jeweils einen Stützabschnitt 28 und einen Nachgebeabschnitt 30 auf. Der Stützabschnitt 28 ist aus einem weniger weichen Kunststoff ausgebildet als der Nachgebeabschnitt 30. Der Nachgebeabschnitt 30 bildet eine dem jeweils anderen Entkopplungselement 20, 22 zugewandte Oberfläche 25 der Scheibensegmente 24 und eine von der Bolzenlängsachse LA abgewandte Oberfläche 27 der Hülsensegmente 26 aus. Zumindest abgesehen von bevorzugt vorhandenen, sich radial bzw. axial erstreckenden und die Oberfläche 25 bzw. die Oberfläche 27 mit ausbildenden Rippen sind die Entkopplungselemente 20, 22 gemäß dem dargestellten Ausführungsbeispiel achsensymmetrisch zur Bolzenlängsachse LA ausgebildet.

### Bezugszeichenliste

- 2: Befestigungsvorrichtung
- 4: Fahrzeugbefestigungsteil
- 10: Bolzenelement
- 12: Kopfabschnitt
- 14: Mittelabschnitt
- 16: Senkabschnitt
- 20: Erstes Entkopplungselement
- 22: Zweites Entkopplungselement
- 24: Scheibensegment
- 25: Oberfläche des Scheibensegmentes
- 26: Hülsensegment
- 27: Oberfläche des Hülsensegmentes
- 28: Stützabschnitt
- 30: Nachgebeabschnitt
- 32: Axialanlagefläche

- A20: Axiale Erstreckung des ersten Entkopplungselementes
- A22: Axiale Erstreckung des zweiten Entkopplungselementes
- AE: Abstand der Kopfanlageebene von der Rahmenanlageebene
- KE: Kopfanlageebene
- L24: Länge der Längsschnittsfläche des Scheibensegmentes
- L26: Länge der Längsschnittsfläche des Hülsensegmentes
- LA: Bolzenlängsachse
- R12: Erste radiale Erstreckung
- R14: Zweite radiale Erstreckung
- R16: Dritte radiale Erstreckung
- RE: Rahmenanlageebene

## Patentansprüche

1. Befestigungsvorrichtung (2) zur schwingungsentkoppelten Befestigung eines Fahrzeugbefestigungsteils (4) an einem Fahrzeugrahmenteil, umfassend
- ein sich länglich in Richtung einer Bolzenlängsachse (LA) erstreckendes Bolzenelement (10), das
o einen Kopfabschnitt (12), der sich axial bis zu einer zur Bolzenlängsachse (LA) rechtwinkligen Kopfanlageebene (KE) erstreckt und eine erste radiale Erstreckung (R12) hat,
o einen Mittelabschnitt (14), der sich axial von der Kopfanlagebene (KE) bis zu einer zur Bolzenelementlängsachse (LA) rechtwinkligen Rahmenanlageebene (RE) erstreckt und eine zweite radiale Erstreckung (R14) hat, die kleiner als die erste radiale Erstreckung (R12) ist,
und
o einen Senkabschnitt (16), der axial an die Rahmenanlageebene (RE) anschließt, eine dritte radiale Erstreckung (R16) hat und zur axialen Einführung in das Fahrzeugrahmenteil ausgebildet ist,
aufweist,
und
- eine Schwingungsentkopplungseinrichtung, durch die sich das Bolzenelement (10) erstreckt, die an dem Fahrzeugbefestigungsteil (4) anzulegen ist und die
o ein erstes Entkopplungselement (20), das ein Scheibensegment (24), das sich im Wesentlichen radial von dem Bolzenelement (10) wegerstreckt und an die Kopfanlageebene (KE) angrenzt, und ein Hülsensegment (26) aufweist, das sich im Wesentlichen axial vom Scheibensegment (24) in Richtung der Rahmenanlageebene (RE) erstreckt,
und
o ein zweites Entkopplungselement (22), das ein Scheibensegment (24), das sich im Wesentlichen radial von dem Bolzenelement (10) wegerstreckt und an die Rahmenanlageebene (RE) angrenzt, und ein Hülsensegment (26) aufweist, das sich im Wesentlichen axial vom Scheibensegment (24) in Richtung der Kopfanlageebene (KE) erstreckt,
aufweist,
wobei die dritte radiale Erstreckung (R16) derart kleiner als die zweite radiale Erstreckung (R14) ist, dass der Mittelabschnitt (14) zu einer Begrenzung des Einführens des Bolzenelementes (10) in das Fahrzeugrahmenteil ausgebildet ist,
wobei zumindest eines der Entkopplungselemente (20, 22) einteilig und in einem Längsschnitt entlang einer Längsschnittebene, in der die Bolzenlängsachse (LA) angeordnet ist, beiderseits der Bolzenlängsachse (LA) L-förmig ausgebildet ist.

2. Befestigungsvorrichtung nach Anspruch 1, **dadurch gekennzeichnet, dass** die kumulierte axiale Erstreckung (A20, A22) der Entkopplungselemente (20, 22) kleiner ist als der Abstand (AE) der Kopfanlageebene (KE) von der Rahmenanlageebene (RE).

3. Befestigungsvorrichtung nach Anspruch 2, **dadurch gekennzeichnet, dass** die kumulierte axiale Erstreckung (A20, A22) der Entkopplungselemente (20, 22) kleiner ist als eine Hälfte, bevorzugt ein Drittel, des Abstandes (AE) der Kopfanlageebene (KE) von der Rahmenanlageebene (RE).

4. Befestigungsvorrichtung nach einem der vorhergehenden Ansprüche, **gekennzeichnet durch** eine derartige Ausbildung des Bolzenelementes (10), dass eine zur Bolzenlängsachse (LA) rechtwinklige Querschnittsfläche des Mittelabschnittes (14) zwischen der Kopfanlageebene (KE) und der Rahmenanlageebene (RE) unveränderlich ist.

5. Befestigungsvorrichtung nach einem der vorhergehenden Ansprüche, **dadurch gekennzeichnet, dass** das Bolzenelement (10) eine Axialanlagefläche (32) aufweist, die sich zumindest teilweise eben in der Rahmenanlageebene (RE) erstreckt.

6. Befestigungsvorrichtung nach einem der vorhergehenden Ansprüche, **dadurch gekennzeichnet, dass** eine Längsschnittsfläche des Scheibensegmentes (24) des ersten Entkopplungselementes (20) und/oder zweiten Entkopplungselementes (22) einerseits der Bolzenlängsachse (LA) eine Länge (L24) hat, die zumindest halb so groß ist und/oder höchstens gleich groß ist wie eine Länge (L26) einer Längsschnittsfläche des Hülsensegmentes (26) einerseits der Bolzenlängsachse (LA).

7. Befestigungsvorrichtung nach einem der vorhergehenden Ansprüche, **dadurch gekennzeichnet, dass** das erste Entkopplungselement (20) und/oder das zweite Entkopplungselement (22) vollständig durch zumindest einen Kunststoff ausgebildet sind/ist.

8. Befestigungsvorrichtung nach Anspruch 7, **dadurch gekennzeichnet, dass** das erste Entkopplungselement (20) und/oder das zweite Entkopplungselement (22) einen Stützabschnitt (28), der aus einem ersten Kunststoff ausgebildet ist, und einen Nachgebeabschnitt (30) umfassen/t, der aus einem zweiten Kunststoff ausgebildet ist, der weicher als der erste Kunststoff ist.

9. Befestigungsvorrichtung nach Anspruch 8, **dadurch gekennzeichnet, dass** der Nachgebeabschnitt (30) zumindest eine dem jeweils anderen Entkopplungselement (22, 20) zugewandte Oberfläche (25) des Scheibensegmentes (24) und eine von der Bolzenlängsachse (LA) abgewandte Oberfläche (27) des Hülsensegmentes (26) ausbildet.

10. Befestigungsvorrichtung nach Anspruch 8 oder 9, **dadurch gekennzeichnet, dass** der Nachgebeabschnitt (30) des ersten Entkopplungselementes (20) und/oder des zweiten Entkopplungselementes (22) sich so weit von der Kopfanlageebene (KE) bzw. der Rahmenanlageebene (RE) wegerstreckt wie das Hülsensegment (26) des ersten Entkopplungselementes (20) bzw. des zweiten Entkopplungselementes (22).

11. Fahrzeug aufweisend ein Fahrwerk, einen Antrieb, das Fahrzeugrahmenteil, das Fahrzeugbefestigungsteil (4), wobei das Fahrzeugbefestigungsteil (4) mittels zumindest einer Befestigungsvorrichtung (2) nach einem der vorhergehenden Ansprüche am Fahrzeugrahmenteil befestigt ist.

12. Fahrzeug nach Anspruch 11, **dadurch gekennzeichnet, dass** das Fahrzeugbefestigungsteil (4) als elektrisch anzutreibender Kompressor ausgebildet ist.

13. Fahrzeug nach Anspruch 11 oder 12, **dadurch gekennzeichnet, dass** das Fahrzeugrahmenteil von einem Chassis des Fahrzeugs umfasst ist.

## Claims

1. Fastening device (2) for the vibration-decoupled fastening of a vehicle fastening part (4) to a vehicle frame part, comprising
- a bolt element (10) extending longitudinally in the direction of a bolt longitudinal axis (LA) and comprising
∘ a head section (12) which extends axially up to a head contact plane (KE) perpendicular to the bolt longitudinal axis (LA) and has a first radial dimension (R12),
∘ a central section (14) which extends axially from the head contact plane (KE) to a frame contact plane (RE) perpendicular to the bolt longitudinal axis (LA) and has a second radial dimension (R14) which is smaller than the first radial dimension (R12),
and
∘ a countersunk section (16) which adjoins the frame contact plane (RE) axially, has a third radial dimension (R16) and is designed for axial insertion into the vehicle frame component,
and
- a vibration decoupling device through which the bolt element (10) extends, which is to be applied to the vehicle fastening part (4) and which
∘ comprises a first decoupling element (20), which comprises a disc segment (24) extending substantially radially away from the bolt element (10) and adjoining the head contact plane (KE), and a sleeve segment (26) which extends substantially axially from the disc segment (24) towards the frame contact plane (RE),
and
∘ a second decoupling element (22) comprising a disc segment (24) which extends substantially radially away from the bolt element (10) and adjoins the frame contact plane (RE), and a sleeve segment (26) which extends substantially axially from the disc segment (24) towards the head contact plane (KE),
wherein the third radial dimension (R16) is smaller than the second radial dimension (R14) such that the central section (14) is configured to limit the insertion of the bolt element (10) into the vehicle frame component,
wherein at least one of the decoupling elements (20, 22) is formed as a single piece and, in a longitudinal section along a longitudinal section plane in which the bolt longitudinal axis (LA) is located, is L-shaped on both sides of the bolt longitudinal axis (LA).

2. Fastening device according to claim 1, **characterised in that** the cumulative axial extent (A20, A22) of the decoupling elements (20, 22) is less than the distance (AE) between the head contact plane (KE) and the frame contact plane (RE).

3. Fastening device according to claim 2, **characterised in that** the cumulative axial extent (A20, A22) of the decoupling elements (20, 22) is less than half, preferably one-third, of the distance (AE) between the head contact plane (KE) and the frame contact plane (RE).

4. Fastening device according to one of the preceding claims, **characterised by** the bolt element (10) being designed such that a cross-sectional area of the central section (14) perpendicular to the bolt longitudinal axis (LA) remains constant between the head contact plane (KE) and the frame contact plane (RE).

5. Fastening device according to one of the preceding claims, **characterised in that** the bolt element (10) has an axial contact surface (32) which extends at least partially in the frame contact plane (RE).

6. Fastening device according to one of the preceding claims, **characterised in that** a longitudinal cross-sectional area of the disc segment (24) of the first decoupling element (20) and/or second decoupling element (22), on one side of the bolt longitudinal axis (LA), has a length (L24) which is at least half as long as, and/or at most equal to, a length (L26) of a longitudinal cross-sectional surface of the sleeve segment (26) on one side of the bolt longitudinal axis (LA).

7. Fastening device according to one of the preceding claims, **characterised in that** the first decoupling element (20) and/or the second decoupling element (22) is/are formed entirely from at least one plastic.

8. Fastening device according to claim 7, **characterised in that** the first decoupling element (20) and/or the second decoupling element (22) comprise a support section (28) formed from a first plastic and a yield section (30) formed from a second plastic which is softer than the first plastic.

9. Fastening device according to claim 8, **characterised in that** the yield section (30) comprises at least one surface (25) of the disc segment (24) facing the respective other decoupling element (22, 20) and one surface (27) of the sleeve segment (26) facing away from the bolt longitudinal axis (LA).

10. Fastening device according to claim 8 or 9, **characterised in that** the yield section (30) of the first decoupling element (20) and/or the second decoupling element (22) extends away from the head contact plane (KE) or the frame contact plane (RE), respectively, by the same distance as the sleeve segment (26) of the first decoupling element (20) or the second decoupling element (22), respectively.

11. Vehicle comprising a chassis, a drive system, the vehicle frame component, and the vehicle fastening component (4), wherein the vehicle fastening component (4) is secured to the vehicle frame component by means of at least one fastening device (2) in accordance with one of the preceding claims.

12. Vehicle according to claim 11, **characterised in that** the vehicle fastening part (4) is designed as an electrically driven compressor.

13. Vehicle according to claim 11 or 12, **characterised in that** the vehicle frame component is enclosed by a chassis of the vehicle.

## Revendications

1. Dispositif de fixation (2) destiné à la fixation découplée des vibrations d'un élément de fixation de véhicule (4) sur une partie du châssis d'un véhicule, comprenant
- un élément de boulon (10) s'étendant longitudinalement dans la direction d'un axe longitudinal du boulon (LA), qui comporte
∘ une partie de tête (12) s'étendant axialement jusqu'à un plan d'appui de tête (KE) perpendiculaire à l'axe longitudinal du boulon (LA) et présentant une première extension radiale (R12),
∘ une partie centrale (14) qui s'étend axialement depuis le plan d'appui de tête (KE) jusqu'à un plan d'appui du châssis (RE) perpendiculaire à l'axe longitudinal du boulon (LA) et qui présente une deuxième extension radiale (R14) inférieure à la première extension radiale (R12),
et
∘ une partie évidée (16) qui se raccorde axialement au plan d'appui du châssis (RE), présente une troisième extension radiale (R16) et est conçue pour être insérée axialement dans l'élément du châssis du véhicule,
et
- un dispositif de découplage des vibrations, à travers lequel s'étend l'élément de boulon (10), qui doit être appliqué contre l'élément de fixation du véhicule (4) et qui
∘ comporte un premier élément de découplage (20), qui comprend un segment de rondelle (24) s'étendant essentiellement radialement à l'opposé de l'élément de boulon (10) et adjacent au plan d'appui de tête (KE), et un segment de douille (26) s'étendant essentiellement axialement à partir du segment de rondelle (24) en direction du plan d'appui du châssis (RE),
et
∘ un deuxième élément de découplage (22) qui comporte un segment de rondelle (24) s'étendant essentiellement radialement à partir de l'élément de boulon (10) et adjacent au plan d'appui du châssis (RE), et un segment de douille (26) qui s'étend essentiellement axialement à partir du segment de rondelle (24) en direction du plan d'appui de tête (KE),
la troisième extension radiale (R16) étant inférieure à la deuxième extension radiale (R14) de telle sorte que la partie centrale (14) est conçue pour limiter l'insertion de l'élément de boulon (10) dans l'élément du châssis du véhicule,
au moins l'un des éléments de découplage (20, 22) étant monobloc et, en coupe longitudinale le long d'un plan de coupe longitudinale dans lequel est disposé l'axe longitudinal du boulon (LA), étant conformé en forme de L de part et d'autre de l'axe longitudinal du boulon (LA).

2. Dispositif de fixation selon la revendication 1, **caractérisé en ce que** l'étendue axiale cumulée (A20, A22) des éléments de découplage (20, 22) est inférieure à la distance (AE) séparant le plan d'appui de tête (KE) du plan d'appui du châssis (RE).

3. Dispositif de fixation selon la revendication 2, **caractérisé en ce que** l'étendue axiale cumulée (A20, A22) des éléments de découplage (20, 22) est inférieure à la moitié, de préférence à un tiers, de la distance (AE) séparant le plan d'appui de tête (KE) du plan d'appui du châssis (RE).

4. Dispositif de fixation selon l'une des revendications précédentes, **caractérisé par** une configuration de l'élément de boulon (10) telle qu'une surface de section transversale de la partie centrale (14), perpendiculaire à l'axe longitudinal du boulon (LA), reste inchangée entre le plan d'appui de tête (KE) et le plan d'appui du châssis (RE).

5. Dispositif de fixation selon l'une des revendications précédentes, **caractérisé en ce que** l'élément de boulon (10) présente une surface d'appui axiale (32) qui s'étend au moins partiellement de manière plane dans le plan d'appui du châssis (RE).

6. Dispositif de fixation selon l'une des revendications précédentes, **caractérisé en ce qu'**une surface de coupe longitudinale du segment de rondelle (24) du premier élément de découplage (20) et/ou du deuxième élément de découplage (22), d'un côté de l'axe longitudinal du boulon (LA), a une longueur (L24) qui est au moins égale à la moitié et/ou au plus égale à une longueur (L26) d'une surface de coupe longitudinale du segment de douille (26), d'un côté de l'axe longitudinal du boulon (LA).

7. Dispositif de fixation selon l'une des revendications précédentes, **caractérisé en ce que** le premier élément de découplage (20) et/ou le deuxième élément de découplage (22) sont entièrement réalisés en au moins une matière plastique.

8. Dispositif de fixation selon la revendication 7, **caractérisé en ce que** le premier élément de découplage (20) et/ou le deuxième élément de découplage (22) comprennent une partie d'appui (28) réalisée dans une première matière plastique et une partie de flexion (30) réalisée dans une deuxième matière plastique plus souple que la première matière plastique.

9. Dispositif de fixation selon la revendication 8, **caractérisé en ce que** la partie de flexion (30) forme au moins une surface (25) du segment de rondelle (24) tournée vers l'autre élément de découplage (22, 20) et une surface (27) du segment de douille (26) détournée de l'axe longitudinal du boulon (LA).

10. Dispositif de fixation selon la revendication 8 ou 9, **caractérisé en ce que** la partie de flexion (30) du premier élément de découplage (20) et/ou du deuxième élément de découplage (22) s'étend à une distance du plan d'appui de tête (KE) ou du plan d'appui du châssis (RE) égale à celle du segment de douille (26) du premier élément de découplage (20) ou du deuxième élément de découplage (22).

11. Véhicule comprenant un châssis, un système de propulsion, l'élément de châssis du véhicule et l'élément de fixation du véhicule (4), l'élément de fixation du véhicule (4) étant fixé à l'élément de châssis du véhicule au moyen d'au moins un dispositif de fixation (2) selon l'une des revendications précédentes.

12. Véhicule selon la revendication 11, **caractérisé en ce que** l'élément de fixation du véhicule (4) est conçu comme un compresseur à entraînement électrique.

13. Véhicule selon la revendication 11 ou 12, **caractérisé en ce que** l'élément de châssis du véhicule est compris dans un châssis du véhicule.
